# EUROPEAN PATENT SPECIFICATION

(11) **EP 1 074 207 B1**
(45) Date of publication and mention of the grant of the patent: **18.05.2005**
(21) Application number: 99830503.1
(22) Date of filing: 04.08.1999
(51) Int. Cl.: A47J 31/24, A47J 31/46

(54) **Espresso coffee machine**
Espressokaffeemaschine
Machine à café espresso

(43) Date of publication of application: 07.02.2001
(73) Proprietor: Gruppo Cimbali S.p.A., 20082 Binasco (MI) (IT)
(72) Inventor: Giuliano, Mario, 12100 Cuneo (IT)
(74) Representative: Long, Giorgio

(56) References cited:
- EP-A- 0 465 877
- EP-A- 0 629 371
- WO-A-94/00045
- US-A- 5 115 730
- US-A- 5 267 506

## Description

In its most general aspect, the present invention relates to an espresso coffee machine.

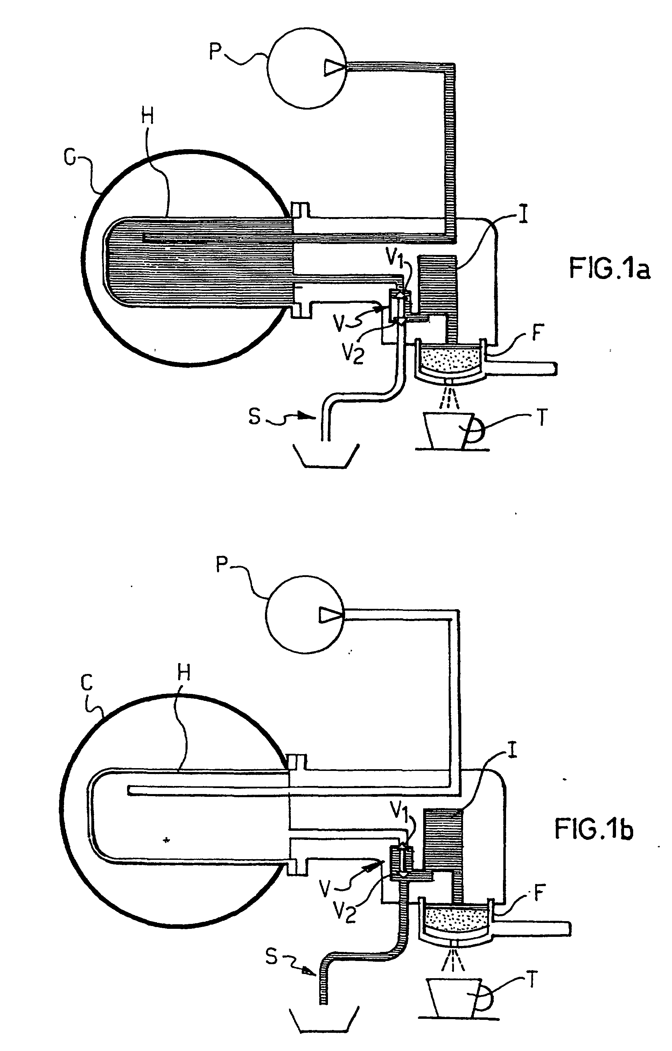

Dispensing devices in known espresso coffee machines are based on the structural configuration shown in Figure 1a. A pump P pumps water through a heating chamber H, which can be heated directly by means of a heating element or indirectly by means of heat exchange with the fluid in the steam generator C. Once it has been heated, the water is pumped to a valve unit V, from where it is conveyed to the filter F containing the coffee powder. The coffee produced in this way is lastly dispensed into the cup T via the holes made in the upper surface of the filter F.

During the dispensing process, the fluid circuit between the pump and the filter (shaded in grey in the figure) is under a pressure of about 8-10 bar generated by the pump P.

Once the coffee has been dispensed, the valve shut-off member V closes the orifice V1, thereby shutting off the delivery of pressure from the pump to the filter. At the same time the orifice V2 is opened, putting the circuit downstream of the valve V into communication with the discharge outlet S, as illustrated in Figure 1b. The pressure in that part of the circuit downstream of the orifice V1 thus falls to atmospheric pressure and the coffee is no longer dispensed.

In recent years there has been a great diversification in the types of coffee blends used in various countries and even in the various regions in Italy. These vary from the richly roasted blends (dark beans) preferred in Southern Italy to the lightly roasted blends (pale beans) generally used in northern countries. We have observed that, especially in the case of the latter, there is a drawback: sludgy coffee grounds remain on the filter once the coffee has been dispensed. Removing and cleaning a filter containing coffee grounds in this state is unpleasant and makes it more difficult to keep the machine clean.

We have thus closely examined all stages of the process in order to discover the cause of this problem and have found that the phenomena that take place in that area of the circuit located downstream of the valve unit V are dependent on the thermal conditions under which the system operates.

The temperature of the water contained in that part of the circuit located between the filter F and the discharge outlet S (portion shaded in grey in Figure 1b) once the dispensing process is complete, depends on the various dispensing methods employed and on the different coffee blends used in the various regions of consumption. These temperatures can vary from 90°C for a long espresso coffee (about 120 cc in the cup) produced by a light blend typical of Northern European countries, to 102°C for a concentrated espresso coffee (about 20 cc in the cup) produced by a richly roasted blend typical of the regions of Southern Italy. If the residual water in the area downstream of the valve unit V is at a temperature equal to or greater than its boiling point at atmospheric pressure (≥ 100°C) a steam pressure is created which forces the water towards the discharge outlet S and consequently causes the coffee grounds to dry out. Needless to say, thoroughly dried coffee grounds can easily be removed from the filter F, which is then immediately ready to be used again.

On the other hand, when the operating temperatures are lower - as is the case with coffee produced using lightly roasted blends - not enough residual water is removed and the coffee grounds become like a wet sludge, as has already been mentioned. What is more, the problem is often exacerbated by the presence of a chamber I between the valve unit V and the filter F, which chamber is necessary to carry out the pre-infusion process. Indeed, a considerable amount of water can be held in this chamber.

The patent publication EP-A-0465877 discloses a discharge valve for the residual water, but does not provide for means for drying the coffe grounds.

The problem that we have brought to light is therefore one of preventing the coffee grounds from forming a sludge which is difficult to remove once the coffee has been dispensed.

This problem has been solved by an espresso coffee machine as detailed in the appended claims.

Further characteristics and advantages of the espresso coffee machine that forms the subject of the present invention will become more clearly evident from the description of a number of preferred embodiments given below by way of non-limiting example and with reference to the following figures:
Figure 1a illustrates a diagrammatic sectional view of an espresso coffee machine according to the prior art;
Figure 1b shows the view from Figure 1a at a different stage in the operation of the appliance;
Figure 2 illustrates a diagrammatic sectional view of an espresso coffee machine according to the present invention;
Figure 3 shows the view from Figure 2 according to a preferred embodiment of the present invention.

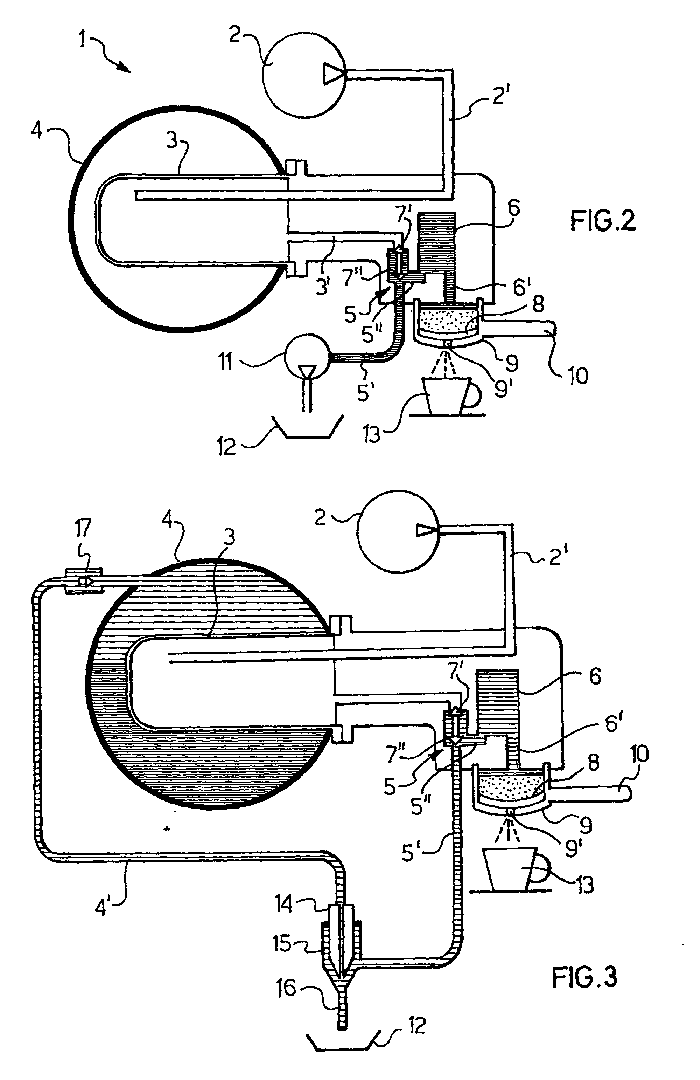

With reference to Figure 2, the espresso coffee machine that forms the subject of the present invention comprises a dispensing device 1 contained within a casing which is not shown in the figure.

The dispensing device 1 comprises a pump 2 which draws water from a tank (not shown) or directly from the water mains and pumps it, via the pipe 2', to a heating chamber 3 in which the water is heated to the desired temperature by means of suitable heating elements arranged around this heating chamber or, preferably, by means of heat exchange with the steam created by the steam generator 4. The steam generator 4, in turn, preferably employs heating elements to convert the water fed independently into it into steam.

The flow rate of the pump 2 and the capacity of the heating chamber 3 dictate the length of time the water remains inside the said chamber 3 and hence its final temperature.

The hot water is then conveyed via the pipe 3' to the valve unit 5 which consists of a body having an upper opening which is in fluid communication with the pipe 3', a first lower opening which is in fluid communication with a discharge pipe 5', and a second lower opening which, via a pipe union 5'', places the valve unit 5 in communication with the pre-infusion chamber 6.

A shut-off member 7' (for example a mushroom-shaped shut-off member) is movably housed in the said upper opening of the valve unit 5. A second shut-off member 7'' (which can, in this case too, be a mushroom-shaped shut-off member) is movably housed in the first lower opening of the valve unit 5. The valve unit 5 is operated, mechanically or electrically, by an actuator which has not been shown in the figure.

The pre-infusion chamber 6 is, via the dispensing pipe 6', in fluid communication with the filter 8 which is designed to hold the coffee blend. The filter 8 is housed in a filter holder 9 which is removably fixed to the machine at the point where the opening for dispensing the hot water is located. The filter holder 9 has a handle 10 in order to facilitate its attachment to and removal from the machine. Holes 9', through which the coffee infusion is dispensed, are made in the lower surface of the filter holder 9.

The espresso coffee machine described above is known.

The espresso coffee machine forming the subject of the invention incorporates the innovative feature of having means for drying out the coffee grounds that remain in the filter 8. In practice these means consist of means for removing the residual water from that part of the fluid circuit located downstream of the shut-off member 7'. This part of the fluid circuit comprises the body of the valve unit 5, the pre-infusion chamber 6, the filter 8 and the associated pipes 5', 5'' and 6'.

As shown in Figure 2, these means for removing the water comprise suction means, especially a pump 11, positioned along the discharge pipe 5', in an intermediate position along it or downstream of the latter. The residual water sucked up is conveyed into a collecting vessel 12 or directly into the waste pipe.

The way in which the espresso coffee machine forming the subject of the present invention works is as follows. While the coffee is being dispensed the pump 2 is on, the shut-off member 7' is open and the shut-off member 7'' is closed. The water, which is pressurized to between 8 and 10 bar by the pump, flows into the heating chamber 3 where it is heated to the desired temperature. From here, the heated water is pumped into the valve unit 5 and from there into the pre-infusion chamber 6, from which it is conveyed to the filter 8 containing the coffee blend. The coffee infusion thus produced is dispensed through the holes 9' in the filter holder 9 and is collected in the cup 13.

Once the coffee has been dispensed, the shut-off member 7' is closed and the pump 2 is switched off. At the same time, the shut-off member 7'' is opened and the pump 11 is activated for a period of time long enough to ensure that the residual water found in that part of the circuit located downstream of the shut-off member 7' is sucked away. In addition to sucking the residual water away towards the discharge outlet, the suction action of the pump 11 causes a pressure drop within the fluid circuit and this helps to dry out the coffee grounds by means of evaporation.

In a particularly preferred embodiment of the present invention, the said suction means comprise an ejector 14. This ejector is housed coaxially inside a suction chamber 15 formed along the discharge pipe 5'. A conduit 16 which leads out to the exterior (for example, into the collecting vessel 12), extends away from the suction chamber 15, in a direction coaxial with the ejector 14. The ejector 14 is in fluid communication with the steam generator 4 via a pipe 4'. A valve 17 regulates the flow of steam from the generator 4 to the ejector 14.

The way in which the suction system works in this case is as follows. Once the coffee has been dispensed, when the shut-off member 7' has been closed and the shut-off member 7'' has been opened, the valve 17 is also opened at the same time. The steam is thus fed to the ejector 14. The flow of steam exiting via the ejector 14 creates a pressure drop in the suction chamber 15 which causes the residual water to be sucked out and ultimately discharged to the exterior via the conduit 16. In this case, too, the drop in pressure generated within the fluid circuit located downstream of the shut-off member 7' causes all the water which has soaked into the coffee grounds to evaporate, eventually making the grounds dry enough to be removed easily from the filter.

In all the embodiments of the present invention, the machine can include a control unit designed to operate the pumps and open and close the valve shut-off members at the appropriate times.

Needless to say, additional variant embodiments of the present invention can be envisaged without thereby departing from the inventive concept on which it is based. For example, the means for removing the residual water can, in addition to the means described above, comprise one or more devices for injecting compressed air or some other drying fluid into the fluid circuit located downstream of the shut-off member 7'. More specifically, these injector devices can open out inside the pre-infusion chamber 6 and/or in the region of the filter 8. The flow of drying fluid on the one hand helps the residual water to flow away naturally and, on the other hand, encourages any water left along the walls of the circuit and in the coffee grounds to evaporate.

In accordance with a further variant, the said means for removing the water can, in addition to those already described, comprise means for heating the entire fluid circuit downstream of the shut-off member 7'. These heating means, which must be capable of raising the temperature of the said fluid circuit to 100°C or above, can consist of a set of heating elements surrounding the said circuit or of a system of heat exchangers which draw heat from the steam generator 4.

Needless to say, the embodiments that have been described above are merely specific embodiments of the espresso coffee machine that forms the subject of the present invention, and those skilled in the art will be able to carry out any modifications that may be necessary in order to adapt it to specific applications, without thereby departing from the scope of protection claimed.

## Claims

1. Espresso coffee machine comprising a pump (2) for pumping water into a heating chamber (3), and a valve unit (5) located downstream of the said heating chamber (3) and connected to the said heating chamber (3) by means of a pipe (3') which terminates at an upper opening of the said valve unit (5), the said valve unit (5) having a first lower opening which is in fluid communication with a discharge pipe (5') and a second lower opening which is in fluid communication with a pre-infusion chamber (6), the said pre-infusion chamber (6) being in fluid communication with the filter (8) via a dispensing pipe (6'), the coffee machine comprises means (11, 14-15) for drying out the coffee grounds that remain in the filter, **characterised in that** the said means for removing the residual water comprise suction means positioned along the discharge pipe (5'), in an intermediate position along it or downstream of the latter.

2. Espresso coffee machine according to Claim 1 or 2, in which a first shut-off member (7') is movably housed in the said upper opening of the said valve unit (5) and in which a second shut-off member (7") is movably housed in the said first lower opening.

3. Espresso coffee machine according to Claim 2, in which the said means for drying out the coffee grounds comprise means for removing the residual water from that part of the fluid circuit located downstream of the said first shut-off member (7').

4. Espresso coffee machine according to any one of claims 1 to 3, in which the said means for removing the residual water comprise an ejector (14) housed inside a suction chamber (15) formed along the discharge pipe (5').

5. Espresso coffee machine according to Claim 4, in which a conduit (16) which leads out to the exterior, extends away from the said suction chamber (15).

6. Espresso coffee machine according to Claim 4 or 5 6, in which the said ejector (14) is in fluid communication with a steam generator (4) via a pipe (4') for the steam.

7. Espresso coffee machine according to Claim 6, comprising a valve (17) for regulating the flow of steam between the steam generator (4) and the ejector (14).

8. Espresso coffee machine according to any of Claims 1 to 3, wherein the said suction means are a pump (11).

9. Process for drying out the coffee grounds that remain in the filter, comprising the stage of removing the residual water once the coffee infusion has been dispensed, by means of suction or drop in pressure.

## Patentansprüche

1. Espressokaffeemaschine, welche eine Pumpe (2) aufweist, um Wasser in eine Heizkammer (3) zu pumpen, und eine Ventileinheit (5), die stromabwärts der Heizkammer (3) angeordnet ist und die mit der Heizkammer (3) über einen Kanal (3') verbunden ist, der eine obere Öffnung der Ventileinheit (5) abschließt, wobei die Ventileinheit (5) eine erste untere Öffnung hat, welche in Fluidkommunikation mit einem Entleerungskanal (5') ist, und eine zweite untere Öffnung, welche in Fluidkommunikation mit einer Voraufbrüh-Kammer (6) ist, wobei die Voraufbrüh-Kammer (6) in Fluidkommunikation mit dem Filter (8) über einen Verteilungskanal (6') steht, wobei die Kaffeemaschine eine Einrichtung (11, 14-15) aufweist, um den Kaffeesatz zu trocknen, der im Filter bleibt, **dadurch gekennzeichnet, dass** die Einrichtung zum Beseitigen des Restwassers eine Saugeinrichtung, die längs des Entleerungskanals (5') angeordnet ist, in einer Zwischenposition im Längsverlauf oder stromabwärts des letzteren aufweist.

2. Espressokaffeemaschine nach Anspruch 1, bei der ein erstes Absperrteil (7') in der oberen Öffnung der Ventileinheit (5) bewegbar untergebracht ist und bei der ein zweites Absperrteil (7 ") in der ersten unteren Öffnung bewegbar untergebracht ist.

3. Espressokaffeemaschine nach Anspruch 2, wobei die Einrichtung zum Trocknen des Kaffeesatzes eine Einrichtung aufweist, um das Restwasser von diesem Teil des Fluidkreises zu beseitigen, welcher stromabwärts des ersten Absperrteils (7') angeordnet ist.

4. Espressokaffeemaschine nach einem der Ansprüche 1 bis 3, bei der die Einrichtung zum Beseitigen des Restwassers ein Auswurforgan (14) aufweist, welches innerhalb einer Saugkammer (15) angeordnet ist, die längs des Entleerungskanals (5') gebildet ist.

5. Espressokaffeemaschine nach Anspruch 4, bei der eine Leitung (16), die nach außen führt, sich weg von der Saugkammer (15) erstreckt.

6. Espressokaffeemaschine nach Anspruch 4 oder 5, bei der das Auswurforgan (14) in Fluidverbindung mit einem Dampfgenerator (4) über einen Kanal (4') für den Dampf steht.

7. Espressokaffeemaschine nach Anspruch 6, welche ein Ventil (7) aufweist, um den Dampffluss zwischen dem Dampfgenerator (4) und dem Auswurforgan (14) zu regeln.

8. Espressokaffeemaschine nach einem der Ansprüche 1 bis 3, wobei die Saugeinrichtung eine Pumpe (11) ist.

9. Verfahren zum Trocknen des Kaffeesatzes, der im Filter bleibt, welches den Schritt aufweist, das Restwasser, wenn das Kaffeebrühen beendet ist, mittels Saugens oder Druckabfall zu beseitigen.

## Revendications

1. Machine à café Espresso comprenant une pompe (2) pour pomper l'eau dans une chambre de chauffage (3) et une unité de soupape (5) placé en aval de ladite chambre de chauffage (3) et raccordée à ladite chambre de chauffage (3) au moyen d'un tuyau (3') qui se termine au niveau d'une ouverture supérieure de ladite unité de soupape (5), ladite unité de soupape (5) ayant une première ouverture inférieure qui est en communication fluidique avec un tuyau de décharge (5') et une seconde ouverture inférieure qui est en communication fluidique avec une chambre de pré-infusion (6), ladite chambre de pré-infusion (6) étant en communication fluidique avec le filtre (8) via un tuyau de distribution (6'), la machine à café comprenant un moyen (11, 14 et 15) pour sécher le marc de café qui demeure dans le filtre, **caractérisé en ce que** ledit moyen pour enlever l'eau résiduelle comprend un moyen d'aspiration positionné le long du tuyau de décharge (5'), à une position intermédiaire le long de celui-ci ou en aval de ce dernier.

2. Machine à café Espresso selon la revendication 1, dans laquelle un premier élément de coupure (7') est logé de manière amovible dans ladite ouverture supérieure de ladite unité de soupape (5) et dans lequel un second élément de coupure (7'') est logé de manière amovible dans ladite première ouverture inférieure.

3. Machine à café Espresso selon la revendication 2, dans laquelle ledit moyen pour sécher le marc de café comprend un moyen pour enlever l'eau résiduelle de cette partie du circuit de fluide positionné en aval dudit premier élément de coupure (7').

4. Machine à café Espresso selon la revendication 1 à 3, dans laquelle ledit moyen pour enlever l'eau résiduelle comprend un éjecteur (14) reçu à l'intérieur d'une chambre d'aspiration (15) formée le long du tuyau de décharge (5').

5. Machine à café Espresso selon la revendication 4, dans laquelle un conduit (16) qui conduit vers l'extérieur, s'étend à l'opposé de ladite chambre d'aspiration (15).

6. Machine à café Espresso selon la revendication 4 ou 5, dans laquelle ledit éjecteur (14) est en communication fluidique avec un générateur de vapeur (4) via un tuyau (4') pour la vapeur.

7. Machine à café Espresso selon la revendication 6 comprenant une soupape (17) pour réguler l'écoulement de la vapeur entre le générateur de vapeur (4) et l'éjecteur (14).

8. Machine à café Eepresso selon l'une quelconque des revendications 1 à 3, dans laquelle lesdits moyens d'aspiration sont une pompe (11).

9. Procédé pour sécher le marc de café qui demeure dans le filtre, comprenant l'étape consiscant. à enlever l'eau résiduelle une fois que l'infusion de café a été distribuée, au moyen d'une aspiration ou chute de pression.
